# EUROPEAN PATENT APPLICATION

(11) **EP 4 838 174 A1**
(43) Date of publication of application: **11.11.2026**
(21) Application number: 26176073.0
(22) Date of filing: 01.05.2026
(51) Int. Cl.: G01C 21/00, G01C 21/32, G06F 16/29, G06V 20/56

(54) **METHOD AND APPARATUS FOR OPTIMIZING IMAGERY FOR MAP FEATURE EXTRACTION**

(30) Priority: 05.05.2025 US 202519198280
(71) Applicant: HERE Global B.V., 5611 ZT Eindhoven (NL)
(72) Inventor: LI, Yiren, Chicago (US); JIN, Xiaoying, Boulder (US); GAO, Kanke, Fremont (US); WEST, James, Chicago (US)
(74) Representative: Potter Clarkson

(57) **Abstract**

An approach is provided for optimizing imagery for map feature extraction. The approach involves, for instance, receiving a plurality of drives. Each drive is a continuous data collection event in which imagery is captured by a sensor of a vehicle or device as the vehicle or device travels along a path. Each drive comprises the imagery and metadata indicating location coordinates and timestamp data for each captured image or video. The approach also involves determining a quantified redundancy between each drive and one or more selected drives. The quantified redundancy is based on a percentage of overlap between each drive and one of the selected drives. The approach further involves performing a classification of each drive as redundant or not redundant based on a redundancy threshold. The approach further involves filtering the plurality of drives based on the classification, and providing the filtered plurality of drives as an output.

## Description

### BACKGROUND

The present disclosure relates generally to the field of digital mapping, and more specifically to the efficient processing of street-level imagery and video data for map feature extraction. Street-level data, captured by sources such as vehicle sensors, dashcams, and mobile devices, provides rich information for identifying map features. However, large-scale data collection often results in significant data redundancy, where imagery of the same road segments are captured multiple times. Accordingly, mapping service providers face significant technical challenges with respect to minimizing such redundancy without affecting map data quality and/or coverage.

### SOME EXAMPLE EMBODIMENTS

Therefore, there is a need for optimizing imagery data for map feature extraction.

According to one embodiment, a method comprises receiving a plurality of drives. Each drive of the plurality of drives is a continuous data collection event in which imagery is captured by a sensor of a vehicle or a device as the vehicle or the device travels along a path. Each drive comprises the imagery and metadata indicating location coordinates and timestamp data for each captured image or captured video. The method also comprises determining a quantified redundancy between each drive and one or more selected drives. The quantified redundancy is based on a percentage of overlap between each drive and one of the one or more selected drives. The method further comprises performing a classification of each drive as redundant or not redundant by comparing of the quantified redundancy against a redundancy threshold. The method further comprises filtering the plurality of drives based on the classification, and providing the filtered plurality of drives as an output. In one embodiment, the method further comprises performing a map feature extraction on the filtered plurality of drives.

According to another embodiment, an apparatus comprises at least one processor, and at least one memory including computer program code for one or more computer programs, the at least one memory and the computer program code configured to, with the at least one processor, cause, at least in part, the apparatus to receive a plurality of drives. Each drive of the plurality of drives is a continuous data collection event in which imagery is captured by a sensor of a vehicle or a device as the vehicle or the device travels along a path. Each drive comprises the imagery and metadata indicating location coordinates and timestamp data for each captured image or captured video. The apparatus is also caused to determine a quantified redundancy between each drive and one or more selected drives. The quantified redundancy is based on a percentage of overlap between each drive and one of the one or more selected drives. The apparatus is further caused to perform a classification of each drive as redundant or not redundant by comparing of the quantified redundancy against a redundancy threshold. The apparatus is further caused to filter the plurality of drives based on the classification, and providing the filtered plurality of drives as an output. In one embodiment, the apparatus is further caused to perform a map feature extraction on the filtered plurality of drives.

According to another embodiment, a computer-readable storage medium carries one or more sequences of one or more instructions which, when executed by one or more processors, cause, at least in part, an apparatus to receive a plurality of drives. Each drive of the plurality of drives is a continuous data collection event in which imagery is captured by a sensor of a vehicle or a device as the vehicle or the device travels along a path. Each drive comprises the imagery and metadata indicating location coordinates and timestamp data for each captured image or captured video. The apparatus is also caused to determine a quantified redundancy between each drive and one or more selected drives. The quantified redundancy is based on a percentage of overlap between each drive and one of the one or more selected drives. The apparatus is further caused to perform a classification of each drive as redundant or not redundant by comparing of the quantified redundancy against a redundancy threshold. The apparatus is further caused to filter the plurality of drives based on the classification, and providing the filtered plurality of drives as an output. In one embodiment, the apparatus is further caused to perform a map feature extraction on the filtered plurality of drives.

According to another embodiment, an apparatus comprises means for receiving a plurality of drives. Each drive of the plurality of drives is a continuous data collection event in which imagery is captured by a sensor of a vehicle or a device as the vehicle or the device travels along a path. Each drive comprises the imagery and metadata indicating location coordinates and timestamp data for each captured image or captured video. The apparatus also comprises means for determining a quantified redundancy between each drive and one or more selected drives. The quantified redundancy is based on a percentage of overlap between each drive and one of the one or more selected drives. The apparatus further comprises means for performing a classification of each drive as redundant or not redundant by comparing of the quantified redundancy against a redundancy threshold. The apparatus further comprises means for filtering the plurality of drives based on the classification, and providing the filtered plurality of drives as an output. In one embodiment, the apparatus further comprises means for performing a map feature extraction on the filtered plurality of drives.
The following numbered paragraphs are also disclosed:
1. A computer-implemented method comprising:
   receiving a plurality of drives, wherein each drive of the plurality of drives is a continuous data collection event in which imagery is captured by a sensor of a vehicle or a device as the vehicle or the device travels along a path, and wherein each drive comprises the imagery and metadata indicating location coordinates and timestamp data for each captured image or captured video;
   determining a quantified redundancy between each drive and one or more selected drives, wherein the quantified redundancy is based on a percentage of overlap between each drive and one of the one or more selected drives;
   performing a classification of each drive as redundant or not redundant by comparing of the quantified redundancy against a redundancy threshold;
   filtering the plurality of drives based on the classification; and
   providing the filtered plurality of drives as an output.
2. The method of paragraph 1, further comprising:
   performing a map feature extraction on the filtered plurality of drives.
3. The method of paragraph 1, wherein the percentage of overlap is determined by:
   adding a distance buffer to the one or more selected drives to generate one or more buffered areas,
   wherein the distance buffer is added perpendicular to a direction of travel of each of the one or more selected drives; and
   wherein the percentage of overlap is determined based on the one or more buffered areas.
4. The method of paragraph 3, wherein the percentage of overlap is computed as a ratio of a length of each drive that intersects with one of the one or more buffered areas, divided by a total length of said drive.
5. The method of paragraph 3, further comprising:
   determining a count of drives for a road segment, wherein the count is defined by a number of the one or more selected drives and a number of the plurality of drives that intersects the one or more buffered areas,
   wherein the filtering of the plurality of drives is further based on determining that the count exceeds a threshold count.
6. The method of paragraph 1, further comprising:
   segmenting each drive, the one or more selected drives, or a combination thereof into a plurality of segments,
   wherein the determining of the quantified redundancy, the performing of the classification of each drive, the filtering of the plurality of drives, or a combination thereof is based on the plurality of segments.
7. The method of paragraph 1, wherein each of the one or more selected drives is a drive that has been previously classified as not redundant.
8. The method of paragraph 7, further comprising:
   prior to the determining the quantified redundancy, sorting the plurality of drives in order of drive length, wherein the determining the quantified redundancy is performed on each of the plurality of drives in the order of drive length.
9. The method of paragraph 7, further comprising:
   prior to the determining the quantified redundancy, sorting the plurality of drives in order of data collection date , wherein the determining the quantified redundancy is performed on each of the plurality of drives in the order of data collection date.
10. The method of paragraph 1, wherein the classification of each drive as redundant or not redundant is further based on a direction of travel of each drive.
11. The method of paragraph 1, further comprising:
   partitioning the plurality of drives based on one or more tiles,
   wherein the determining of the quantified redundancy, the performing of the classification of each drive as redundant or not redundant, or a combination thereof is based on the one or more tiles.
12. The method of paragraph 11, wherein the determining of the quantified redundancy, the performing of the classification of each drive as redundant or not redundant, or a combination thereof is performed using parallel processing based on the one or more tiles.
13. The method of paragraph 11, wherein the determining of the quantified redundancy, the performing of the classification of each drive as redundant or not redundant, or a combination thereof is performed using one or more Universal Transverse Mercator (UTM) zones.
14. The method of paragraph 13, further comprising:
   determining a most common UTM zone for each tile of the one or more tiles,
   wherein the determining of the quantified redundancy, the performing of the classification of each drive as redundant or not redundant, or a combination thereof for each tile is based on the most common UTM zone.
15. An apparatus comprising:
   at least one processor; and
   at least one memory including computer program code for one or more programs,
   the at least one memory and the computer program code configured to, with the at least one processor, cause the apparatus to perform at least the following,
      receive a plurality of drives, wherein each drive of the plurality of drives is a continuous data collection event in which imagery is captured by a sensor of a vehicle or a device as the vehicle or the device travels along a path, and wherein each drive comprises the imagery and metadata indicating location coordinates and timestamp data for each captured image or captured video;
      determine a quantified redundancy between each drive and one or more selected drives, wherein the quantified redundancy is based on a percentage of overlap between each drive and one of the one or more selected drives;
      perform a classification of each drive as redundant or not redundant by comparing of the quantified redundancy against a redundancy threshold;
      filter the plurality of drives based on the classification; and
      provide the filtered plurality of drives as an output.
16. The apparatus of paragraph 15, wherein the percentage of overlap is determined by:
   adding a distance buffer to the one or more selected drives to generate one or more buffered areas,
   wherein the distance buffer is added perpendicular to a direction of travel of each of the one or more selected drives; and
   wherein the percentage of overlap is determined based on the one or more buffered areas.
17. The apparatus of paragraph 16, wherein the percentage of overlap is computed as a ratio of a length of each drive that intersects with one of the one or more the buffered areas, divided by a total length of each segment.
18. A non-transitory computer-readable storage medium, carrying one or more sequences of one or more instructions which, when executed by one or more processors, cause an apparatus to at least perform the following steps:
   receiving a plurality of drives, wherein each drive of the plurality of drives is a continuous data collection event in which imagery is captured by a sensor of a vehicle or a device as the vehicle or the device travels along a path, and wherein each drive comprises the imagery and metadata indicating location coordinates and timestamp data for each captured image or captured video;
   determining a quantified redundancy between each drive and one or more selected drives, wherein the quantified redundancy is based on a percentage of overlap between each drive and one of the one or more selected drives;
   performing a classification of each drive as redundant or not redundant by comparing of the quantified redundancy against a redundancy threshold;
   filtering the plurality of drives based on the classification; and
   providing the filtered plurality of drives as an output.
19. The non-transitory computer-readable storage medium of paragraph 18, wherein the percentage of overlap is determined by:
   adding a distance buffer to the one or more selected drives to generate one or more buffered areas,
   wherein the distance buffer is added perpendicular to a direction of travel of each of the one or more selected drives; and
   wherein the percentage of overlap is determined based on the one or more buffered areas.
20. The non-transitory computer-readable storage medium of paragraph 19, wherein the percentage overlap is computed as a ratio of a length of each drive that intersects with one of the one or more buffered areas, divided by a total length of said drive.

In addition, for various example embodiments described herein, the following is applicable: a computer program product may be provided. For example, a computer program product comprising instructions which, when the program is executed by a computer, cause the computer to perform any one or any combination of methods (or processes) disclosed.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing the method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of providing optimized imagery for map feature extraction, according to one example embodiment;
FIG. 2 is a diagram of a mapping platform capable of providing optimized imagery for map feature extraction, according to one example embodiment;
FIG. 3 is a flowchart of a process for providing optimized imagery for map feature extraction, according to one example embodiment;
FIG. 4 is a diagram of an example of drive data before and after redundancy removal, according to one example embodiment;
FIG. 5 is a diagram of an example of comparing drives for redundancy removal, according to one example embodiment;
FIG. 6 is a diagram of an example of calculating an overlap between drives, according to one example embodiment;
FIG. 7 is a diagram of an example of segmenting drives for redundancy removal, according to one example embodiment;
FIG. 8 is a diagram of direction awareness for redundancy removal, according to one example embodiment;
FIG. 9 is a diagram of an example of direction-aware redundancy removal, according to one example embodiment;
FIG. 10 is a diagram of an example of tile-based partitioning for redundancy removal, according to one example embodiment;
FIG. 11 is a diagram of a geographic database, according to one embodiment;
FIG. 12 is a diagram of hardware that can be used to implement an embodiment;
FIG. 13 is a diagram of a chip set that can be used to implement an embodiment; and
FIG. 14 is a diagram of a mobile terminal that can be used to implement an embodiment.

### DESCRIPTION OF SOME EMBODIMENTS

Examples of a method, apparatus, and computer program for optimizing imagery for map feature extraction are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. In addition, the embodiments described herein are provided by example, and as such can also "one embodiment" is used synonymously as "one example embodiment." Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

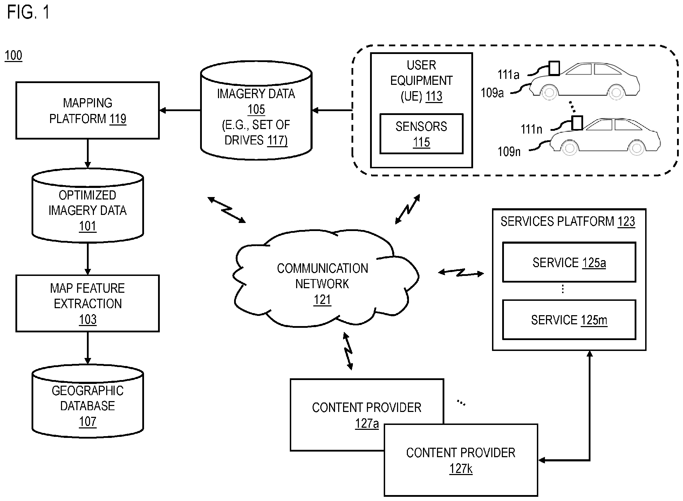

FIG. 1 is a diagram of a system 100 capable of providing optimized imagery 101 for map feature extraction 103, according to one example embodiment. Street-level imagery (SLI) (e.g., imagery data 105) has emerged as an important data source for the creation and maintenance of digital maps (e.g., digital map data of a geographic database 107). As used herein, SLI refers to images and videos captured at ground level, typically along streets and roads, using various collection methods such as but not limited to vehicles (e.g., vehicles 109a-109n - also collectively referred to as vehicles 109), dashcams (e.g., dashcams 111a-111n - also collectively referred to as dashcams 111), and mobile devices (e.g., user equipment (UE) devices 113 equipped with one or more sensors 115). By way of example, this imagery data 105 can be used for creating and maintaining digital maps of the geographic database 107, as it provides detailed visual and positional information about the road environment, including features like road signs, poles, other infrastructure, and/or equivalent. SLI systems may use technologies (e.g., sensors 115) such as but not limited to cameras and/or other related sensors such as but not limited to LiDAR, positioning sensors (e.g., Global Navigation Satellite System (GNSS) receivers), inertial measurement units (IMUs), and/or the like to enhance accuracy and comprehensiveness.

The imagery data 105 can be received as a set of drives 117. Drives 117 in the context of map feature extraction, for instance, refer to the recorded paths or trajectories of vehicles 109, dashcams 111, and/or UEs 113 used to collect the imagery data 105 (e.g., street-level imagery and video data). These images and video data are associated with a sequence of locations and timestamps, effectively capturing the movement of the data collection unit over a certain period. In other words, drives represent the GPS paths of vehicles or the pose paths of data-collection vehicles or devices as they capture street-level imagery and video. These paths are formed by connecting the individual location points associated with each captured image or video frame.

To construct and update digital map data of the geographic database 107, a mapping platform 119 can use imagery data 105 from various SLI providers and sources (e.g., content providers 127a-121k - also collectively referred to as content providers 127) over a communication network 121. The imagery data 105 can then be processed through a mapping pipeline such as map feature extraction 103. For example, SLI (e.g., imagery data 105) can be processed using a mapping pipeline starting with data ingestion, where raw visual data in various formats is received and integrated into a geographic reference system to turn the visual data into geographic information (e.g., where the visual data is correlated with geographic locations). Following ingestion is map feature extraction 103, where machine learning models analyze the imagery data to detect and classify features such as road signs, poles, traffic signals, lane markings, road boundaries, and/or any other type of road feature. The extracted features, along with their spatial information, are then utilized in map derivation to construct and update digital maps, positioning these features accurately at corresponding geographic locations. A snapshot of the live map, containing the updated information, is created as a unified and consistent base for publication, making the enhanced map content available for various applications (e.g., a services platform 123 and/or one or more services 125a-127m - also collectively referred to as services 125 - of the services platform 123) and/or users (e.g., UEs 113 and/or vehicles 109).

However, a significant challenge arises from the inherent redundancy present in large collections of street-level imagery and video data, particularly when data is gathered over extensive geographic regions. This redundancy often stems from the uncoordinated nature of data collection efforts, where the same streets and areas are captured repeatedly by various sources and on different occasions. For instance, multiple vehicles 109, dashcams 111, and/or devices 113 might traverse the same road numerous times, resulting in tens or even thousands of overlapping or identical image and video captures. This issue of data redundancy leads to substantial inefficiencies and increased costs across the data processing pipeline, including data acquisition, storage, and the computational resources required for map feature extraction 103, without a corresponding increase in overall road coverage or the identification of new map features. Therefore, addressing data redundancy presents significant technical challenges for optimizing the computational efficiency of map feature extraction 103 from street-level imagery and video data.

For example, the data redundancy problem is challenging to solve due to the technical challenges below:

### 1) Challenge in Identifying Redundant Data

Difficult to Use Image-Based Methods: Capturing the same street from different camera angles, under varying lighting, or in different weather conditions can cause images of the same location to appear very different. Furthermore, using image-based methods to compare such large datasets is computationally expensive, especially when working with large data collection for roads totaling millions of kilometers.

Inaccurate GPS Data: Imprecise or drifting GPS data can make a vehicle or device's recorded path appear offset from the actual road, leading to challenges in determining whether the vehicle or device captured new roads or redundantly covered a road already documented by another vehicle or device.

Perspective Variability: Street features captured from different directions may look significantly different and contain different features of interests. For example, vehicles driving in opposite directions on the same road may have nearly identical GPS paths but capture different traffic signs.

Near-Redundant Captures: It is more common for vehicle routes to partially or nearly overlap rather than perfectly overlap. Vehicles 109, dashcams 111, and/or devices 113 may travel the same road for a stretch before diverging. Additionally, two vehicles 109, dashcams 111, and/or devices 113 on the same road but in different lanes can produce data that seems distinct based on pose paths but captures largely redundant street views or road features. Determining whether such data is truly redundant or adds value can be difficult.

### 2) Challenge in Optimizing Redundancy Elimination Without Compromising Coverage

Removing redundant data while ensuring complete coverage of streets is challenging. The risk of unintentionally creating gaps in road coverage is high when imperfect redundancies are eliminated.

### 3) Challenges in Efficiently and Effectively Executing Redundant Data Removal at Scale

Identifying redundant data in a massive dataset, such as terabytes or petabytes of images and videos from millions of vehicles, is resource intensive. As the dataset grows, the complexity of comparing each new piece of data against the complete set can lead to significant performance bottlenecks.

Conventional technologies and methods for addressing data redundancy in street-level imagery and video for map feature extraction have limitations. One conventional approach involves using a centralized route optimization system to plan and track data collection efforts. Such a system plans and tracks the complete fleet's or device's data collection efforts. This system dynamically informs collectors about areas that have already been covered, helping them avoid redundant captures. However, in real-world cases, challenges arise when using data from multiple providers, which may lack centralized planning efforts. Additionally, in many cases, providers do not support central coordination of where vehicles travel, leading to non-optimized data collection routes. For instance, if the data is crowdsourced, the location and nature of data collection are fully determined by the individual uploading the data, with no ability to enforce planned routes. Additionally, SLI data could be a secondary output of the providers, and some other primary objective of the providers may take priority when determining where collectors should go, making SLI data collection a secondary concern.

Another conventional method involves consolidating data after the initial processing stage. Since identifying duplicate drives upfront is difficult, a common approach is to conduct feature extraction on all available data first and then apply deduplication or consolidation techniques on the processed output. For example, when multiple drives or devices collect data for the same street features, all the data is processed, and the relevant features are extracted. This process may result in multiple instances of the same map feature. Techniques like object association and clustering can then be applied to consolidate or deduplicate these extracted features, ensuring that only unique and relevant features are retained. However, because this approach processes all redundant data, it incurs high processing costs, and processing multiple drives of the same road doesn't necessarily provide significant additional value in terms of features extracted..

To address these technical challenges, the system 100 of FIG. 1 introduces a capability to greatly reduce the processing time and costs while optimizing efficiency in map feature extraction using street-level imagery and video data by mitigating the problem of data redundancy. The various embodiments described herein eliminate redundant street-level imagery and video data without compromising the overall road coverage.

For example, the various example embodiments described herein provide for data redundancy identification and removal based on pose or drive data via one or more of the following processes:
1) Drive Segmentation: in one embodiment, the system 100 breaks long drives into shorter segments before beginning the redundancy identification process. This reduces both road coverage gaps and residual redundancy in the output after redundancy removal.
2) Priority on Long Continuous or Fresh Drives: in one embodiment, the system 100 gives higher priority in retaining long continuous drives, for instance, by feeding drives into the data redundancy identification process in a descending order sorted by drive length. This also reduces both road coverage gaps and residual redundancy in the output after redundancy removal. Similarly, in other embodiments, the system 100 provides an option to sort by data collection date instead of drive length, enabling a scenario such that fresher data is given higher priority for retention.
3) Fuzzy Comparison: in one embodiment, the system 100 enables fuzzy comparison in redundancy determination by adding a customizable distance buffer around pose paths and an overlapping threshold. This enables the system 100 to capture redundant drives that do not have perfectly or highly overlapping pose paths but remain consistently close with each other.
4) Quantified Redundancy: in one embodiment, the system 100 determines the extent of redundancy for each drive or drive segment by assessing how many qualified drives or drive segments it potentially overlaps with and the percentage of overlap. This enables the system 100 to control the level of aggressiveness in redundancy removal at a higher level by thresholding.
5) Direction Awareness: in one embodiment, the various embodiments of redundancy determination are direction aware. For example, the system 100 can calculate each drive's direction of travel based on time-ordered pose points, and enable an option to retain a drive that is on the same road as others, yet traveling in its own distinct direction.

In yet other embodiment, the various embodiments described herein provide for processing optimization for redundancy determination including but not limited to the following:
1) Tile-based Partitioning: in one embodiment, the system 100 breaks drives 117 or drive segments in the imagery data 105 into smaller groups, for instance, by assigning them to corresponding map tiles using any geographic tiling mechanism. In this way, drives 117 or drive segments would only be compared to others within the same tile, rather than across all drives or drive segments, for redundancy identification. This greatly reduces processing time and costs.
2) Parallel Processing: in one embodiment, as each tile can be processed independently from other tiles, the system 100 can use parallel processing over multiple tiles at the same time to greatly reduce processing time.
3) Universal Transverse Mercator (UTM) Zone Locking: in one embodiment, map tiles can be used in conjunction with a UTM coordinate system for representing the surface of the Earth (e.g., UTM divides the Earth into 60 vertical strips, each spanning 6° of longitude). A map tile can potentially overlap with two UTM zones, making it difficult to compare spatial data accurately across zones. In one embodiment, the system 100 addresses this technical challenge by choosing the most common UTM Zone within each tile as the UTM zone to use for converting all pose points within the tile. The system 100 can minimize the projection distortion by using smaller geographic tiles for partitioning drives 117.

The various embodiments described herein provide for several advantages including but not limited to the following:
1) Reduce Processing Time and Costs while Optimizing Efficiency in Map Feature Extraction: eliminating redundant data before map feature extraction greatly reduces related processing time and costs while optimizing efficiency.
2) Fuzzy Comparison: enabling fuzzy comparison captures hard cases of redundant data associated with noisy GPS data and near-overlapping pose paths.
3) Removing Redundancy Without Compromising Road Coverage: using drive segmentation, implementing direction-aware logic, and enabling thresholding on redundancy removal aggressiveness minimizes coverage gaps.
4) Fast Speed: parallel processing and partitioning by geographic tiles greatly reduce processing time for redundancy identification and removal at scale.

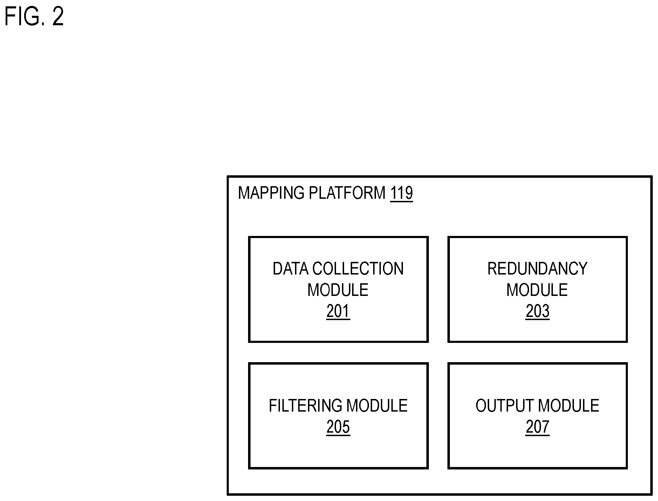

FIG. 2 is a diagram of a mapping platform capable of providing optimized imagery for map feature extraction, according to one example embodiment. In one embodiment, as shown in FIG. 2, the mapping platform 119 includes one or more components for providing optimized imagery for map feature extraction, according to the various embodiments described herein. It is contemplated that the functions of these components may be combined or performed by other components of equivalent functionality. In this embodiment, the mapping platform 119 includes a data collection module 201, a redundancy module 203, a filtering module 205, and an output module 207. The above presented modules and components of the mapping platform 119 can be implemented in hardware, firmware, software, or a combination thereof. Though shown as an separate entity, it is contemplated that the mapping platform 119 may be implemented as a module of any other component of the system 100 (e.g., a component of the services platform 123, services 125, vehicle 109, UE 113, etc.). In another embodiment, one or more of the modules 201-207 may be implemented as a cloud based service, local service, native application, or combination thereof.

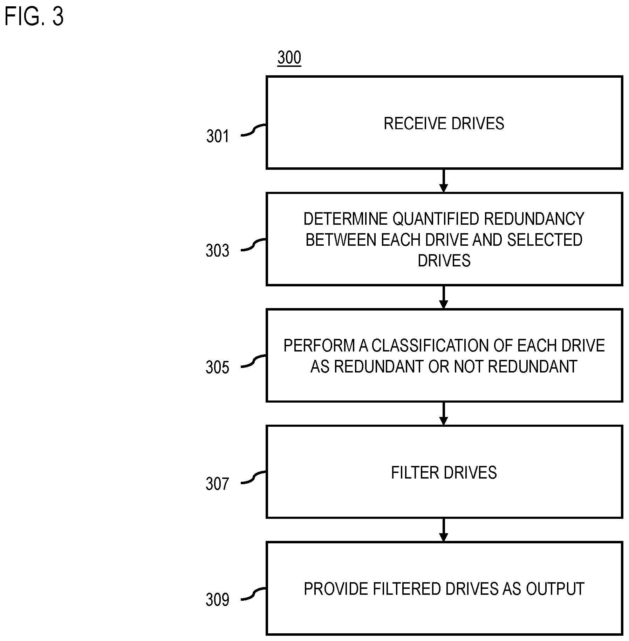

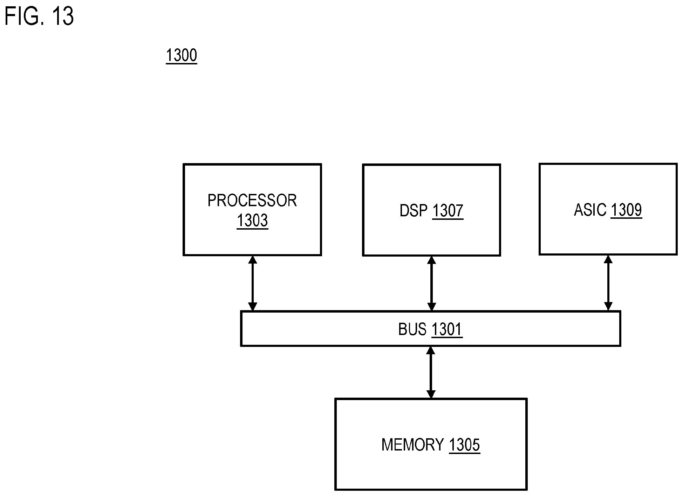

FIG. 3 is a flowchart of a process 300 for providing optimized imagery for map feature extraction, according to one example embodiment. In various embodiments, the mapping platform 119 and/or one or more of its modules 201-207 as shown in FIG. 2 may perform one or more portions of the process 300 and may be implemented in, for instance, a chip set including a processor and a memory as shown in FIG. 13. As such, the mapping platform 119 and/or one or more of its modules 201-207 can provide means for accomplishing various parts of the process 300, as well as means for accomplishing embodiments of other processes described herein in conjunction with other components of the system 100. Although the process 300 is illustrated and described as a sequence of steps, its contemplated that various embodiments of the process 300 may be performed in any order or combination and need not include all of the illustrated steps.

As discussed above, processing redundant (or overlapping) street-level imagery and video data for map feature extraction increases processing time and costs without enhancing coverage. The various embodiments of the process 300 described herein optimizes drives and associated imagery in the imagery data 105 so that the drives are directed to unique coverage areas. More specifically, the process 300 automatically removes (e.g., filters without human interaction) redundant drives/images from the imagery data 105, thereby also eliminating redundant processing time and costs without compromising road coverage.

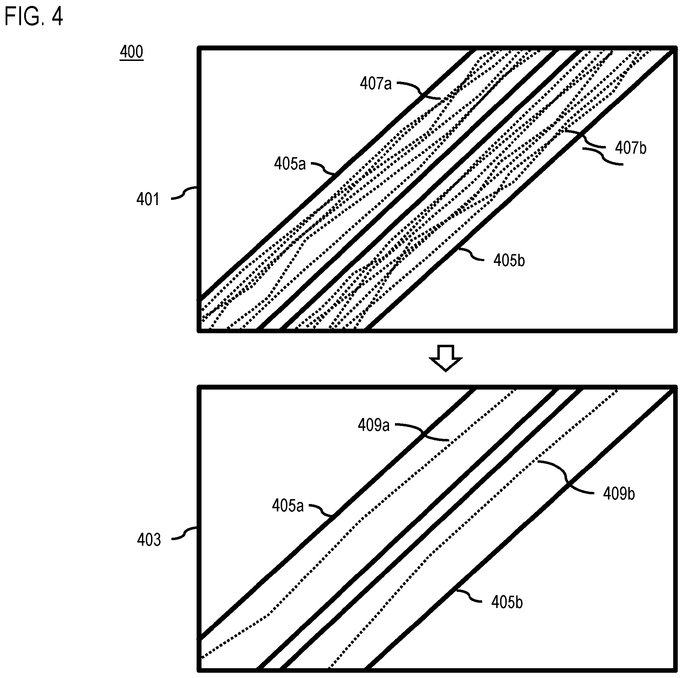

FIG. 4 is a diagram of an example 400 of drive data before and after redundancy removal, according to one example embodiment. In example 400, the two images 401 and 403 illustrate the effect of redundancy removal according to the various embodiments described herein. Image 401 illustrates a two road segments 405a and 405b each with corresponding drive data 407a and 407b. Drive data 407a and 407b contain a plurality of drives that capture street level imagery of the road segments 405a and 405b. A drive refers to the journey or path taken by data-collection vehicles or devices to capture street-level imagery and information for mapping purposes. Each drive records pose paths/trajectories (e.g., a sequence of location coordinates and associated timestamp), which are the routes and positions that the vehicles or devices traverse during the data collection process. Along each path, the vehicle or device is configured to capture imagery (e.g., automatically at a set frequency, on demand, according to schedule, and/or the like). In one embodiment, the location coordinates and timestamps can be included as metadata associated with each corresponding captured image or video.

The pose paths or trajectories of the drive data 407a and 407b are illustrated as dashed lines. Image 401 illustrates that there drive data 407a and 407b have multiple overlapping pose paths of the data-collection vehicles or devices before redundancy removal. Following redundancy removal according to the various embodiments described herein, image 403 illustrates that the multiple pose paths of image 401 has been reduced to just a single selected drive 409a and 409b for each respective road segment 405a and 405b. This means that the street-level imagery from only one drive path for each road segment 405a and 405b needs to be processed for map feature extraction to cover each road segment 405a and 405b instead of the all of the multiple drive paths of drive data 407a and 407b.

In one embodiment, the process 300 provides for data redundancy identification and removal. For example, the mapping platform 119 can identify redundancy in the imagery data 105 by comparing drive pose paths of drives in the imagery data 105.

At step 301, the data collection module 201 receives a plurality of drives (e.g., included in or otherwise associated the imagery data 105). In one embodiment, each drive of the plurality of drives is a continuous data collection event in which imagery is captured by a sensor of a vehicle or a device as the vehicle or the device travels along a path. In addition, each drive comprises the imagery and metadata indicating location coordinates and timestamp data for each captured image or captured video. A "continuous data collection event" is a single, uninterrupted image capturing session during which street-level imagery, video data, and associated information like location coordinates (e.g., latitude, longitude) are captured by a vehicle or device as it moves along a path.

In one embodiment, the mapping platform 119 performs a fuzzy comparison for redundancy determination. By way of example, fuzzy comparison is a method used to determine overlaps between data sets by allowing for slight variations and imprecision. Instead of requiring exact matches, it uses a customizable distance buffer to identify potential redundancy. In one embodiment, drives or drive segments are checked for redundancy following an iterative approach. Each drive or drive segment will be compared against the "already selected" or "approved" list of drives or drive segments to check for overlaps. The "already selected" drive or drive segment refers to a drive that has already been determined to be not redundant following a redundancy check according to the various embodiments described herein. As the redundancy check is performed iteratively on a set of drives, each new drive in the set is compared against the drives that were classified as not redundant and placed onto the "already selected" or "approved" list of drives or drive segments.

To determine if a drive or drive segment overlaps with any in the "already selected" or "approved" list, the redundancy module 203 can add a customizable distance buffer to all drives or drive segments in the "already selected" list and check whether the new drive intersects with any of the buffered areas. This allows the redundancy module 203 to capture potentially redundant drives or drive segments that do not have perfectly or highly overlapping pose paths but remain consistently close with each other (e.g., via a fuzzy comparison). For example, the distance buffer is added perpendicular to a direction of travel of each of the one or more selected drives along the extent of the drive.

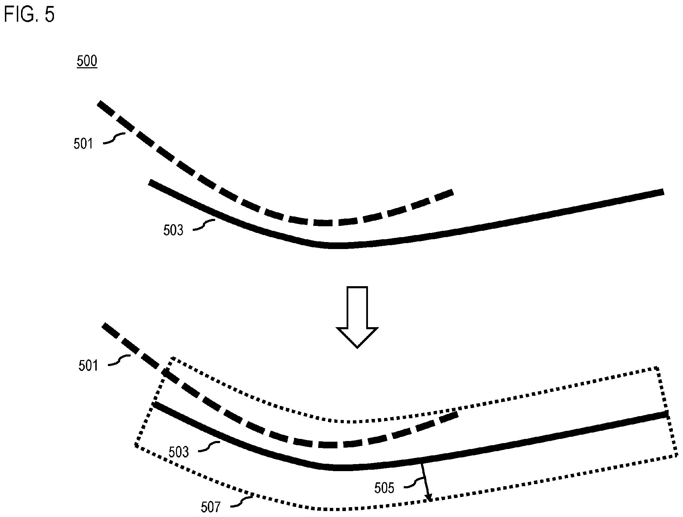

FIG. 5 is a diagram of an example 500 of comparing drives for redundancy removal, according to one example embodiment. In example 500, a new drive path 501 (e.g., a drive currently being evaluated for redundancy) is being compared to an already selected drive path 503 (e.g., a drive previously determined to be non-redundant and added to an approved list). The new drive path 501 and already selected drive path 503 represent, for instance, pose paths derived from location coordinates associated with imagery data collection. As depicted, the new drive path 501 travels in close proximity to the already selected drive path 503 over a segment of their respective lengths.

To perform this comparison in a fuzzy manner, a buffer distance 505 is added to the already selected drive path 503 (e.g., added perpendicular to the direction of travel of the already selected drive path 503). As shown, the predefined or customizable buffer distance 505 is used to create a buffered area 507 around the already selected drive path 503. The new drive path 501 is then evaluated based on its intersection with this buffered area 507. In the example shown, the new drive path 501 intersects or falls within the buffered area 507 of the already selected drive path 503, indicating potential spatial overlap or redundancy according to the parameters of the fuzzy comparison. This determination of intersection with the buffered area 506 can be used for redundancy identification according to the various embodiments described herein. In one embodiment, the fuzzy comparison also considers drive direction, since drives with overlapping pose paths but traveling in the opposite directions can still capture different road features on different sides of the road. Further details on direction consideration is discussed further below.

At step 303, the redundancy module 203 determines a quantified redundancy between each drive (e.g., drive being evaluated for redundancy) and one or more selected drives (e.g., an already selected drive or approved drive). In one embodiment, the quantified redundancy is based on a percentage of overlap between each drive and one of the one or more selected drives. More specifically, following the example from above, if overlapping is identified, the redundancy module 203 can calculate the overlap ratio as the length of the drive or drive segment that intersects with the buffered area, divided by the total length of the drive or drive segment.

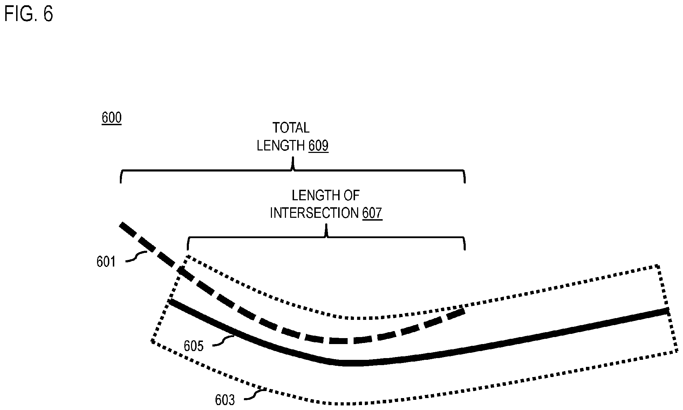

FIG. 6 is a diagram of an example 600 of calculating an overlap between drives, according to one example embodiment. In example 600, a new drive path 601 intersects a buffered area 603 associated with an already selected drive path 605. Once an intersection between the new drive 601 and the buffered area 603 of the selected drive 605 is detected, an overlap ratio is calculated to quantify the extent of the redundancy. In one example embodiment, this overlap ratio is computed as a length of intersection 607 (e.g., the length of the segment of the new drive path 601 that lies within the buffered area 603), divided by the total length 609 of the new drive path 601. This calculated ratio (e.g., the quantified redundancy) represents the percentage of the new drive that overlaps with the buffered region of already selected drives.

At step 305, the redundancy module 203 performs a classification of each drive as redundant or not redundant by comparing of the quantified redundancy against a redundancy threshold. In other words, this quantified redundancy or overlap ratio allows the system 100, for instance, via the redundancy module 203, to apply defined criteria for redundancy classification. By comparing the calculated overlap ratio against a configurable redundancy threshold (e.g., an overlap percentage threshold), the system can control the aggressiveness of redundancy removal, determining whether drives should be classified as redundant and subsequently filtered out, according to one example embodiment.

At step 307, the filtering module 205 filters the plurality of drives (e.g., in the imagery data 105) based on the classification of whether the drives are redundant or not redundant. A new drive or drive segment will be added to the selected or approved list (e.g., list of not redundant drives) if it meets the defined criteria for overlap or redundancy. Otherwise, the drive is filtered or otherwise not included in the selected or approved list.

In one embodiment, the overlap ratio allows the redundancy module 203 to control the aggressiveness of redundancy removal (e.g., filtering of drives) by applying thresholding within the criteria. For example, if the threshold is set at 80%, and the intersected part of the drive or drive segment is longer than 80% of the total length, then the drive or drive segment will be considered "redundant" and not be added to the approved list (e.g., filtered from the imagery set that will be processed for map feature extraction or further processing in the mapping pipeline). In other words, controlling the aggressiveness of redundancy removal refers to adjusting the criteria used to determine whether a drive or drive segment is redundant. This is done by setting thresholds for overlap percentages and other parameters, such as buffer distances and the number of allowable overlaps per road segment. For example, if the threshold is set at a higher percentage, only drives with significant overlap will be considered redundant, thus retaining more drives for further processing. Conversely, a lower threshold would result in more drives being removed for redundancy, increasing the likelihood of excluding drives that may still contain useful data. Therefore, "aggressiveness" refers to how many drives will be filtered or not filtered.

Additionally, the redundancy module 203 can also calculate how many approved samples intersect with the new sample through their respective buffered areas. This metric can be used as basis for implementing additional threshold in the system's redundancy removal criteria, allowing the system 100 to further control the aggressiveness of redundancy removal. For example, the redundancy module 203 can implement a "maximum allowed drives per road segment" threshold. If this threshold is set at two (or any other designated number), a redundant drive or drive segment will still be added to the approved list if it is only overlapping with one other drive or drive segment in the approved list. More drives or drive segments would be retained for map feature extraction or further processing if the threshold is set to a higher number.

At step 309, the output module 207 provides the filtered plurality of drives as an output. In one embodiment, this involves summarizing the results of the redundancy removal process and generating a final list of non-redundant drives or drive segments (e.g., the selected drives or approved list). In addition or alternatively, the output can be the set of imagery data 105 with the redundant imagery removed. The output module 207 ensures that the filtered data meets the criteria set by the redundancy module and is ready for subsequent stages of processing, such as map feature extraction or further analysis.

In one embodiment, the data collection module 201 can break long drives into shorter segments before beginning the redundancy identification process 300. In other words, the data collection module 201 segments each drive, the one or more selected drives, or a combination thereof into a plurality of segments. Then, the determining of the quantified redundancy, the performing of classification of each drive, the filtering of the plurality of drives, or a combination thereof is based on the plurality of segments. This reduces both road coverage gaps and residual redundancy in the output after redundancy removal.

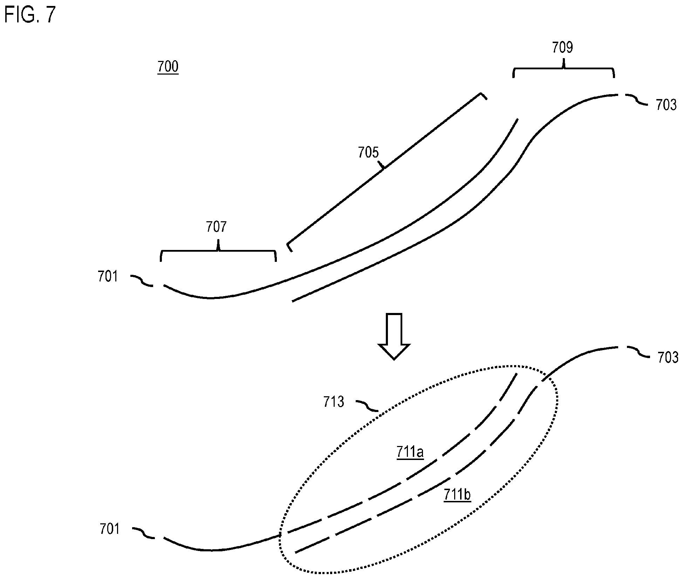

FIG. 7 is a diagram of an example 700 of segmenting drives for redundancy removal, according to one example embodiment. In this example, drive 701 and drive 703 are being compared for redundancy removal. They partially overlap along a common path section 705, representing imagery collection over the same road segment. However, drive 701 also includes a unique initial section 707, and drive 703 includes a unique final section 709, representing coverage of different road segments not covered by the other drive.

In this scenario, if redundancy analysis were performed on the entire drives 701 and 703, a simple decision to remove either drive 701 or drive 703 based on the significant overlap in section 705 would lead to a loss of coverage provided by the unique sections 707 or 709, respectively. Conversely, retaining both entire drives 701 and 703 would result in unnecessary processing of redundant imagery data corresponding to the overlapping section 705.

By segmenting drive 701 and drive 703 (as indicated by respective new segment sets 711a and 711b created within the highlighted overlapping area 713), the system 100 can perform redundancy checks at the segment level. This allows the system to identify and filter out only the redundant segments within the overlapping area 713 (e.g., keeping one set 711a of segments covering area 713 while discarding the other set 711b) while retaining the non-redundant segments corresponding to the unique sections 707 and 709. According to one example embodiment, this segmentation approach thereby minimizes both coverage gaps and the processing of redundant data.

In one embodiment, the system 100 can place priority on long continuous and/or fresh drives for redundancy removal. By way of example, the system 100 can give higher priority in retaining long continuous drives by feeding drives into the data redundancy identification process in a descending order sorted by drive length. The length of a drive can be determined by the total distance covered based on its sequence of location coordinates. As previously discussed, the redundancy identification process is iterative. It starts with an empty set of selected drives and then considers each drive one by one. Because of this, the order in which these drives are considered is determined by the pre-processing sorting step described above. Drives that are higher up in the sorted order (e.g., longer drives) are evaluated for redundancy before those lower down in the order. By processing the longest drives first in the iterative selection process, these drives have a higher chance of being added to the already selected or approved list of drives. Subsequent, shorter drives that significantly overlap with these longer, already approved drives are more likely to be marked as redundant and discarded. This also reduces both road coverage gaps and residual redundancy in the output after redundancy removal.

Similarly, the system 100 provides an option to sort by data collection date instead of drive length, enabling that fresher data is given higher priority for retention. In one embodiment, this involves sorting in descending order of the most recent timestamp associated with the drive. By processing the most recently collected data first, the system 100 ensures that the map feature extraction process relies on the latest available information. Similar to the length-based sorting, fresher drives, when processed earlier, are more likely to be retained, and older, substantially overlapping drives will be marked as redundant

In one embodiment, the redundancy determination is direction aware. The system 100 can calculate each drive's direction of travel based on time-ordered pose points, and enable an option to retain a drive that is on the same road as others, yet traveling in its own distinct direction. Drives with overlapping pose paths but traveling in the opposite directions can still capture different road features on different sides of the road.

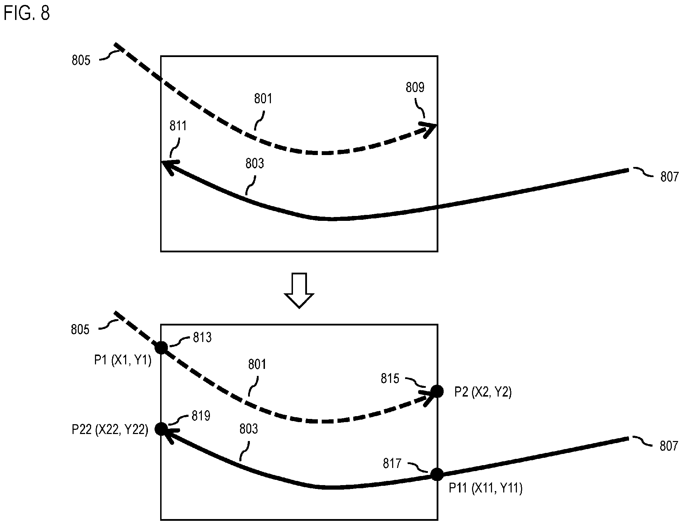

FIG. 8 is a diagram of direction awareness for redundancy removal, according to one example embodiment. Embodiments recognize that drives covering the same geographic area but traveling in opposite directions may capture different map features (e.g., signs facing one direction of traffic) and thus might not be considered fully redundant. To determine if a pair of overlapping drives are in the opposite directions, the system 100 first finds the boundary points for each of the overlapped segments 801 and 803. Segment 801 is the part of drive 805 that overlaps with drive 807, and segment 803 is the part of the drive 807 that overlaps with drive 805. The arrows 809 and 811 indicate the direction of travel of each drive 805 and 807, respectively.

For the first drive 805, the boundary points are point 813 (also referred to and labeled as P1 with coordinates x1, y1) and point 815 (also referred to and labeled as P2 with coordinates x2, y2). For the second drive 807, the boundary points are point 817 (also referred to and labeled as P11 with coordinates x11, y11) and point 819 (also referred to and labeled as P22 with coordinates x22, y22). These boundary points represent, for example, where each drive path enters and exits the region defined by the overlapping segments 801 and 803. The sequence of these points for each drive (e.g., from P1 to P2 for the first drive 805, and from P22 to P11 for the second drive 807) is determined based on the associated timestamp data for the pose points comprising the drives.

In one embodiment, for each drive, the system 100 sorts the boundary points 813-819 by their timestamps: e.g., P1 to P2; and P11 to P22. Then, the system 100 determines which of the x and y axes has the longer projection of the overlapped drive segments - e.g., if |x1-x2|>|y1-y2|, then the drive has a longer projection on the x axis; otherwise, the y axis.

In this example, the drives 805 and 807 have a longer projection on x axis, so the system 100 can use the x coordinates for relative direction determination. If (x1-x2)/(x11-x22) > 0, then it will mean the directions of travel between the two drives 805 and 807 are the same directions of travel; otherwise, it is determined to be opposite directions of travel.

In other words, the coordinates of these time-ordered boundary points 813-819 can be used to determine the relative direction. For instance, by comparing the differences in x-coordinates (x1-x2) and (x11-x22) or y-coordinates, depending on the axis of longer projection for the segments, the system 100 can ascertain whether the drives 805 and 807 traverse in the same or opposite directions. This determined directionality can then be incorporated as a factor in the redundancy classification step (e.g., step 305 of process 300) when deciding if a drive is redundant relative to another selected drive, according to one example embodiment.

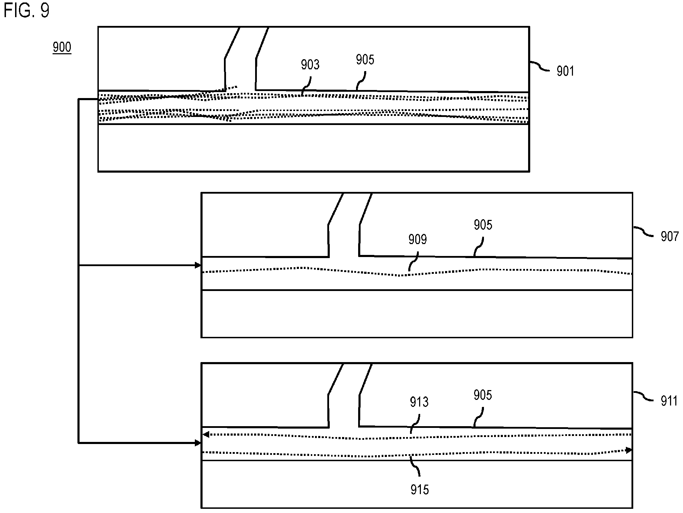

FIG. 9 is a diagram of an example 900 of direction-aware redundancy removal, according to one example embodiment. In example 900, the system 100 adds the direction consideration as part of the criteria for redundancy identification. Image 901 depicts a collection of drive paths 903 along a road segment 905 prior to redundancy removal. This collection of drive paths 903 includes multiple overlapping paths representing travel in substantially opposite directions along the road.

As illustrated in image 907, without directions being factored in, only one drive 909 remains after redundant data is removed from all drives 903 on the same road 905. Image 907 illustrates this outcome when redundancy removal is performed without direction awareness. In this scenario, because the paths 903 overlap significantly in geographic space, a non-direction-aware process might identify most paths as redundant relative to an initially selected path, resulting in the retention of only a single representative drive path 909 for the road segment 905. This may lead to the loss of imagery data capturing features relevant only to the discarded direction of travel.

As illustrated in Image 911, with directions being factored in, two drives 913 and 915 (e.g., one for each direction of travel) remain after redundant data is removed from all drives 903 on the same road 905. This preserves imagery data relevant to both directions along the road segment, potentially improving the comprehensiveness of subsequent map feature extraction.

In one embodiment, the system 100 can employ one or more processing optimization to reduce the processing resources and/or costs associated with redundancy removal.

Fo example, the system 100 can use tile-based partitioning of the imagery data 105. In this embodiment, the system 100 breaks or partitions drives into smaller groups by assigning them to corresponding map/geographic tiles or other equivalent tiling mechanisms. As used herein, map tiles are subdivisions of a geographic area into smaller segments. Each tile represents a specific section of the map, enabling efficient processing and rendering. Assigning drive data to corresponding tiles allows for redundancy removal and data comparison within localized segments or geographic areas, optimizing resource usage and enhancing accuracy. In one embodiment, drive-tile assignment is determined by the tile in which a drive or drive segment's center point falls, ensuring a one-to-one relationship between each drive or drive segment and its corresponding tile. Drives or drive segments are then compared to others within the same tile, rather than across all drives or drive segments, for redundancy identification. This greatly reduces processing time and costs.

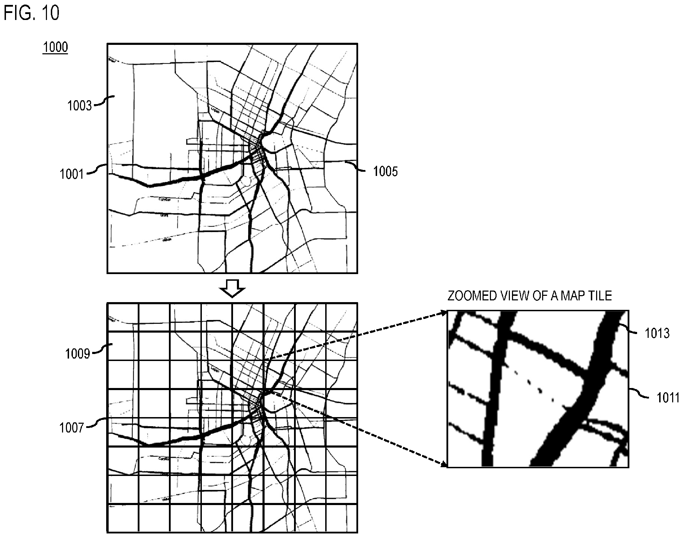

FIG. 10 is a diagram of an example 1000 of tile-based partitioning for redundancy removal, according to one example embodiment. Image 1001 shows an example geographic area 1003 containing a plurality of drive paths 1005 (e.g., pose paths from collected imagery data 105). Processing redundancy for all drives 1005 across the entire area 1003 simultaneously can be computationally intensive.

As shown in image 1007, to improve efficiency, the geographic area 1005 is partitioned into a grid of smaller geographic units or tiles 1009. While rectangular tiles are shown, any suitable geographic tiling system may be used. Each drive or drive segment is assigned to a corresponding tile 1009 based on its geographic location (e.g., based on the tile(s) its path intersects or where its center point resides). Image 1011 shows an enlarged view of a single tile from the grid of image 1007, illustrating the subset of drive path data 1013 contained within or assigned to that specific tile. This tile-based partitioning can be used in combination with other processing optimization strategies as described below.

In one embodiment, the system 100 can implement tile-based parallel processing. As each tile can be processed independently from other tiles, the system 100 can use parallel processing to greatly reduce processing time. Parallel processing refers to the simultaneous execution of multiple computations over multiple processors or compute threads, which can significantly reduce processing time. In the context of tile-based partitioning, parallel processing can be employed to enhance efficiency. By partitioning drives into smaller geographic tiles, each tile can be processed independently and in parallel (e.g., process to perform the determining of the quantified redundancy, the classification of each drive as redundant or not redundant, or a combination thereof). This means that while one processor/core/thread/etc. is analyzing data within one tile, others can simultaneously work on different tiles.

In one embodiment, the system 100 can use UTM coordinates to facilitate distance comparisons and measurements for redundancy identification and removal (e.g., determining of the quantified redundancy, the classification of each drive as redundant or not redundant, or a combination thereof). However, a geographic tile (e.g., if tile-based partitioning is used) can overlap with two UTM zones, making it difficult to compare spatial data accurately across zones. To address this technical challenge, the system 100 can identify or otherwise determine the most common UTM Zone among the available drives or drive segments within a tile and then use it as the universal UTM zone for converting all pose points to UTM coordinates within the tile. This optimization minimizes the projection distortion by using smaller geographic tiles for drives partitioning. In this way, the determining of the quantified redundancy, the classification of each drive as redundant or not redundant, or a combination thereof for each tile is based on the most common UTM zone.

Returning to FIG. 1, as shown, the system 100 comprises one or more vehicles 109 and/or one or more UEs 113 that act as probes traveling over a road network to capture SLI (e.g., imagery data 105). Although the vehicles 109 are depicted as automobiles, it is contemplated that the vehicles 109 can be any type of transportation vehicle, manned or unmanned (e.g., planes, aerial drone vehicles, motorcycles, boats, bicycles, etc.), and the UE 113 can be associated with any of the types of vehicles or a person or thing (e.g., a pedestrian) traveling within a transportation or road network. In one embodiment, each vehicle 109 and/or UE 113 is assigned a unique probe identifier (probe ID) for use in reporting or transmitting probe data and/or SLI collected by the vehicles 109 and UE 113. The vehicles 109 and UE 113, for instance, are part of a probe-based system for collecting probe data for monitoring a road network. In one embodiment, each vehicle 109 and/or UE 113 is configured to report probe data as probe points, which are individual data records collected at a point in time that records telemetry data for that point in time. The probe points and/or SLI can be reported from the vehicles 109 and/or UEs 113 in real-time, in batches, continuously, or at any other frequency requested by the system 100 over, for instance, the communication network 121 for processing by the mapping platform 119.

In one embodiment, the mapping platform 119 performs the processes for providing single-image depth-estimation according to various embodiments described herein. By way of example, the mapping platform 119 can be a standalone server or a component of another device with connectivity to the communication network 121. For example, the component can be part of an edge computing network where remote computing devices (not shown) are installed along or within proximity of a transportation network to provide optimized imagery for map feature extraction.

In one embodiment, the vehicles 109 and/or UE 113 may execute an application to present or use the results of map feature extraction performed by the mapping platform 119 according to the embodiments described herein. For example, if the application is a navigation application, then the map feature extraction results can be used to determine positioning information, routing information, and the like.

By way of example, the UE 113 is any type of embedded system, mobile terminal, fixed terminal, or portable terminal including a built-in navigation system, a personal navigation device, mobile handset, station, unit, device, multimedia computer, multimedia tablet, Internet node, communicator, desktop computer, laptop computer, notebook computer, netbook computer, tablet computer, personal communication system (PCS) device, personal digital assistants (PDAs), audio/video player, digital camera/camcorder, positioning device, fitness device, television receiver, radio broadcast receiver, electronic book device, game device, or any combination thereof, including the accessories and peripherals of these devices, or any combination thereof. It is also contemplated that the UE 113 can support any type of interface to the user (such as "wearable" circuitry, etc.). In one embodiment, the UE 113 may be associated with a vehicle 109 (e.g., cars), a component part of the vehicle 109, a mobile device (e.g., phone), and/or a combination of thereof. Similarly, the vehicle 109 may include computing components that can perform all or a portion of the functions of the UE 113.

By way of example, the application may be any type of application that is executable at the vehicle 109 and/or the UE 113, such as mapping applications, location-based service applications, navigation applications, content provisioning services, camera/imaging application, media player applications, social networking applications, calendar applications, and the like. In one embodiment, the application may act as a client for the mapping platform 119 and perform one or more functions of the mapping platform 119 alone or in combination with the platform 119.

In one embodiment, the vehicles 109 and/or the UE 113 are configured with various sensors for generating SLI and/or related probe data. By way of example, the sensors for generating SLI and/or probe data may include a global positioning sensor for gathering location data (e.g., GPS), Light Detection And Ranging (LIDAR) for gathering distance data and/or generating depth maps, infrared sensors for thermal imagery, a network detection sensor for detecting wireless signals or receivers for different short-range communications (e.g., Bluetooth, Wi-Fi, Li-Fi, near field communication (NFC) etc.), temporal information sensors, a camera/imaging sensor for gathering image data (e.g., the camera sensors may automatically capture obstruction for analysis and documentation purposes), an audio recorder for gathering audio data, velocity sensors mounted on steering wheels of the vehicles, switch sensors for determining whether one or more vehicle switches are engaged, and the like.

In another embodiment, the sensors of the vehicles 109 and/or UE 113 may include light sensors, orientation sensors augmented with height sensors and acceleration sensor (e.g., an accelerometer can measure acceleration and can be used to determine orientation of the vehicle), tilt sensors to detect the degree of incline or decline of the vehicle along a path of travel, moisture sensors, pressure sensors, etc. In a further example embodiment, sensors about the perimeter of the vehicle may detect the relative distance of the vehicle from lane or roadways, the presence of other vehicles, pedestrians, traffic lights, potholes and any other objects, or a combination thereof. In one scenario, the sensors may detect weather data, traffic information, or a combination thereof. In one example embodiment, the vehicles 109 and/or UE 113 may include GNSS receivers (e.g. GPS, Galileo, GLONASS or receivers) to obtain geographic coordinates from satellites for determining current location and time associated with the vehicle 109 and/or UE 113 for generating probe data. Further, the location can be determined by a triangulation system such as A-GPS, Cell of Origin, or other location extrapolation technologies.

The communication network 121 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

The services platform 123 may include any type of service 125. By way of example, the services 125 may include mapping services, navigation services, travel planning services, notification services, social networking services, content (e.g., audio, video, images, etc.) provisioning services, application services, storage services, contextual information determination services, location-based services, information based services (e.g., weather, news, etc.), etc. In one embodiment, the services platform 123 may interact with the mapping platform 119, the vehicle 109, the UE 113, and/or one or more content providers 127 to provide the services 125.

In one embodiment, the content providers 127 may provide content or data to the vehicles 109 and/or UEs 113, the mapping platform 119, and/or the services 125. The content provided may be any type of content, such as SLI, mapping content, textual content, audio content, video content, image content, etc. In one embodiment, the content providers 127 may provide content that may aid in the various embodiment of path-based map matching described herein. In one embodiment, the content providers 127 may also store content associated with the vehicles 109, the UE 113, the mapping platform 119, and/or the services 125. In another embodiment, the content providers 127 may manage access to a central repository of data, and offer a consistent, standard interface to data, such as a repository of probe data, probe features/attributes, link features/attributes, etc. Any known or still developing methods, techniques or processes for retrieving and/or accessing feature values for probe points and/or road links from one or more sources may be employed by the mapping platform 119.

By way of example, the vehicles 109, the UEs 113, the mapping platform 119, the services platform 123, and/or the content providers 127 communicate with each other and other components of the system 100 using well known, new or still developing protocols. In this context, a protocol includes a set of rules defining how the network nodes within the communication network 121 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

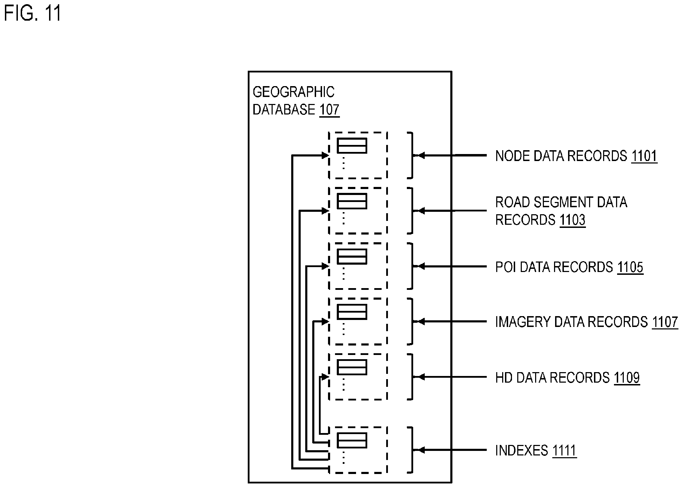

FIG. 11 is a diagram of a geographic database 107, according to one embodiment. In one embodiment, the geographic database 107 includes geographic data 1001 used for (or configured to be compiled to be used for) mapping and/or navigation-related services. In one embodiment, the geographic database 107 include high resolution or high definition (HD) mapping data that provide centimeter-level or better accuracy of map features. For example, the geographic database 107 can be based on Light Detection and Ranging (LiDAR) or equivalent technology to collect billions of 3D points and model road surfaces and other map features down to the number lanes and their widths. In one embodiment, the HD mapping data (e.g., HD data records 1111) capture and store details such as the slope and curvature of the road, lane markings, roadside objects such as sign posts, including what the signage denotes. By way of example, the HD mapping data enable highly automated vehicles to precisely localize themselves on the road, and to determine map data updates (e.g., learned speed limit values) to at high accuracy levels.

In one embodiment, geographic features (e.g., two-dimensional or three-dimensional features) are represented using polygons (e.g., two-dimensional features) or polygon extrusions (e.g., three-dimensional features). For example, the edges of the polygons correspond to the boundaries or edges of the respective geographic feature. In the case of a building, a two-dimensional polygon can be used to represent a footprint of the building, and a three-dimensional polygon extrusion can be used to represent the three-dimensional surfaces of the building. It is contemplated that although various embodiments are discussed with respect to two-dimensional polygons, it is contemplated that the embodiments are also applicable to three-dimensional polygon extrusions. Accordingly, the terms polygons and polygon extrusions as used herein can be used interchangeably.

In one embodiment, the following terminology applies to the representation of geographic features in the geographic database 107.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 107 follows certain conventions. For example, links do not cross themselves and do not cross each other except at a node. Also, there are no duplicated shape points, nodes, or links. Two links that connect each other have a common node. In the geographic database 107, overlapping geographic features are represented by overlapping polygons. When polygons overlap, the boundary of one polygon crosses the boundary of the other polygon. In the geographic database 107, the location at which the boundary of one polygon intersects they boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

In one embodiment, the geographic database 107 is stored as a hierarchical or multilevel tile-based projection or structure. More specifically, in one embodiment, the geographic database 107 may be defined according to a normalized Mercator projection. Other projections may be used. By way of example, the map tile grid of a Mercator or similar projection is a multilevel grid. Each cell or tile in a level of the map tile grid is divisible into the same number of tiles of that same level of grid. In other words, the initial level of the map tile grid (e.g., a level at the lowest zoom level) is divisible into four cells or rectangles. Each of those cells are in turn divisible into four cells, and so on until the highest zoom or resolution level of the projection is reached.

In one embodiment, the map tile grid may be numbered in a systematic fashion to define a tile identifier (tile ID). For example, the top left tile may be numbered 00, the top right tile may be numbered 01, the bottom left tile may be numbered 10, and the bottom right tile may be numbered 11. In one embodiment, each cell is divided into four rectangles and numbered by concatenating the parent tile ID and the new tile position. A variety of numbering schemes also is possible. Any number of levels with increasingly smaller geographic areas may represent the map tile grid. Any level (n) of the map tile grid has 2(n+1) cells. Accordingly, any tile of the level (n) has a geographic area of A/2(n+1) where A is the total geographic area of the world or the total area of the map tile grid 10. Because of the numbering system, the exact position of any tile in any level of the map tile grid or projection may be uniquely determined from the tile ID.

In one embodiment, the system 100 may identify a tile by a quadkey determined based on the tile ID of a tile of the map tile grid. The quadkey, for example, is a one-dimensional array including numerical values. In one embodiment, the quadkey may be calculated or determined by interleaving the bits of the row and column coordinates of a tile in the grid at a specific level. The interleaved bits may be converted to a predetermined base number (e.g., base 10, base 4, hexadecimal). In one example, leading zeroes are inserted or retained regardless of the level of the map tile grid in order to maintain a constant length for the one-dimensional array of the quadkey. In another example, the length of the one-dimensional array of the quadkey may indicate the corresponding level within the map tile grid 10. In one embodiment, the quadkey is an example of the hash or encoding scheme of the respective geographical coordinates of a geographical data point that can be used to identify a tile in which the geographical data point is located.

As shown, the geographic database 107 includes node data records 1101, road segment or link data records 1103, POI data records 1105, imagery data records 1107, HD mapping data records 1109, and indexes 1111, for example. More, fewer, or different data records can be provided. In one embodiment, additional data records (not shown) can include cartographic ("carto") data records, routing data, and maneuver data. In one embodiment, the indexes 1111 may improve the speed of data retrieval operations in the geographic database 107. In one embodiment, the indexes 1111 may be used to quickly locate data without having to search every row in the geographic database 107 every time it is accessed. For example, in one embodiment, the indexes 1111 can be a spatial index of the polygon points associated with stored feature polygons.

In exemplary embodiments, the road segment data records 1103 are links or segments representing roads, streets, or paths, as can be used in the calculated route or recorded route information for determination of one or more personalized routes. The node data records 1101 are end points corresponding to the respective links or segments of the road segment data records 1103. The road link data records 1103 and the node data records 1101 represent a road network, such as used by vehicles, cars, and/or other entities. Alternatively, the geographic database 107 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database 107 can include data about the POIs and their respective locations in the POI data records 1105. The geographic database 107 can also include data about places, such as cities, towns, or other communities, and other geographic features, such as bodies of water, mountain ranges, etc. Such place or feature data can be part of the POI data records 1105 or can be associated with POIs or POI data records 1105 (such as a data point used for displaying or representing a position of a city).

In one embodiment, the geographic database 107 includes imagery data records 1109 which store SLI data and/or related information.

In one embodiment, as discussed above, the HD mapping data records 1109 model road surfaces and other map features to centimeter-level or better accuracy. The HD mapping data records 1109 also include lane models that provide the precise lane geometry with lane boundaries, as well as rich attributes of the lane models. These rich attributes include, but are not limited to, lane traversal information, lane types, lane marking types, lane level speed limit information, and/or the like. In one embodiment, the HD mapping data records 1109 are divided into spatial partitions of varying sizes to provide HD mapping data to vehicles 109 and other end user devices with near real-time speed without overloading the available resources of the vehicles 109 and/or devices (e.g., computational, memory, bandwidth, etc. resources).

In one embodiment, the HD mapping data records 1109 are created from high-resolution 3D mesh or point-cloud data generated, for instance, from LiDAR-equipped vehicles. The 3D mesh or point-cloud data are processed to create 3D representations of a street or geographic environment at centimeter-level accuracy for storage in the HD mapping data records 1109.

In one embodiment, the HD mapping data records 1109 also include real-time sensor data collected from probe vehicles in the field. The real-time sensor data, for instance, integrates real-time traffic information, weather, and road conditions (e.g., potholes, road friction, road wear, etc.) with highly detailed 3D representations of street and geographic features to provide precise real-time also at centimeter-level accuracy. Other sensor data can include vehicle telemetry or operational data such as windshield wiper activation state, braking state, steering angle, accelerator position, and/or the like.

In one embodiment, the geographic database 107 can be maintained by the content provider 127 in association with the services platform 123 (e.g., a map developer). The map developer can collect geographic data to generate and enhance the geographic database 107. There can be different ways used by the map developer to collect data. These ways can include obtaining data from other sources, such as municipalities or respective geographic authorities. In addition, the map developer can employ field personnel to travel by vehicle (e.g., vehicle 109 and/or user device 113) along roads throughout the geographic region to observe features and/or record information about them, for example. Also, remote sensing, such as aerial or satellite photography, can be used.

The geographic database 107 can be a master geographic database stored in a format that facilitates updating, maintenance, and development. For example, the master geographic database or data in the master geographic database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF)) to organize and/or configure the data for performing navigation-related functions and/or services, such as route calculation, route guidance, map display, speed calculation, distance and travel time functions, and other functions, by a navigation device, such as by a vehicle 109 or user device 113. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for providing optimized imagery for map feature extraction may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

Additionally, as used herein, the term 'circuitry' may refer to (a) hardware-only circuit implementations (for example, implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular device, other network device, and/or other computing device.

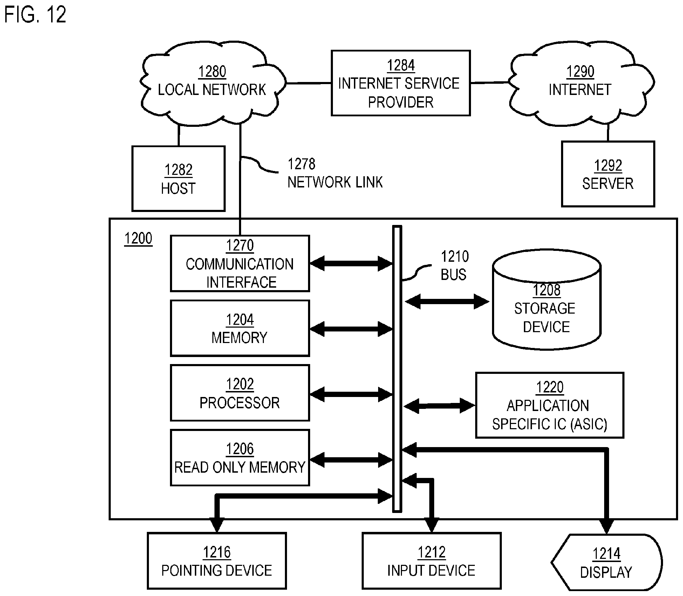

FIG. 12 illustrates a computer system 1200 upon which an embodiment of the invention may be implemented. Computer system 1200 is programmed (e.g., via computer program code or instructions) to provide optimized imagery for map feature extraction as described herein and includes a communication mechanism such as a bus 1210 for passing information between other internal and external components of the computer system 1200. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 1210 includes one or more parallel conductors of information so that information is transferred quickly among devices coupled to the bus 1210. One or more processors 1202 for processing information are coupled with the bus 1210.

A processor 1202 performs a set of operations on information as specified by computer program code related to providing optimized imagery for map feature extraction. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 1210 and placing information on the bus 1210. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 1202, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 1200 also includes a memory 1204 coupled to bus 1210. The memory 1204, such as a random access memory (RAM) or other dynamic storage device, stores information including processor instructions for providing optimized imagery for map feature extraction. Dynamic memory allows information stored therein to be changed by the computer system 1200. RAM allows a unit of information stored at a location called a memory address to be stored and retrieved independently of information at neighboring addresses. The memory 1204 is also used by the processor 1202 to store temporary values during execution of processor instructions. The computer system 1200 also includes a read only memory (ROM) 1206 or other static storage device coupled to the bus 1210 for storing static information, including instructions, that is not changed by the computer system 1200. Some memory is composed of volatile storage that loses the information stored thereon when power is lost. Also coupled to bus 1210 is a non-volatile (persistent) storage device 1208, such as a magnetic disk, optical disk or flash card, for storing information, including instructions, that persists even when the computer system 1200 is turned off or otherwise loses power.

Information, including instructions for providing optimized imagery for map feature extraction, is provided to the bus 1210 for use by the processor from an external input device 1212, such as a keyboard containing alphanumeric keys operated by a human user, or a sensor. A sensor detects conditions in its vicinity and transforms those detections into physical expression compatible with the measurable phenomenon used to represent information in computer system 1200. Other external devices coupled to bus 1210, used primarily for interacting with humans, include a display device 1214, such as a cathode ray tube (CRT) or a liquid crystal display (LCD), or plasma screen or printer for presenting text or images, and a pointing device 1216, such as a mouse or a trackball or cursor direction keys, or motion sensor, for controlling a position of a small cursor image presented on the display 1214 and issuing commands associated with graphical elements presented on the display 1214. In some embodiments, for example, in embodiments in which the computer system 1200 performs all functions automatically without human input, one or more of external input device 1212, display device 1214 and pointing device 1216 is omitted.

In the illustrated embodiment, special purpose hardware, such as an application specific integrated circuit (ASIC) 1220, is coupled to bus 1210. The special purpose hardware is configured to perform operations not performed by processor 1202 quickly enough for special purposes. Examples of application specific ICs include graphics accelerator cards for generating images for display 1214, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 1200 also includes one or more instances of a communications interface 1270 coupled to bus 1210. Communication interface 1270 provides a one-way or two-way communication coupling to a variety of external devices that operate with their own processors, such as printers, scanners and external disks. In general the coupling is with a network link 1278 that is connected to a local network 1280 to which a variety of external devices with their own processors are connected. For example, communication interface 1270 may be a parallel port or a serial port or a universal serial bus (USB) port on a personal computer. In some embodiments, communications interface 1270 is an integrated services digital network (ISDN) card or a digital subscriber line (DSL) card or a telephone modem that provides an information communication connection to a corresponding type of telephone line. In some embodiments, a communication interface 1270 is a cable modem that converts signals on bus 1210 into signals for a communication connection over a coaxial cable or into optical signals for a communication connection over a fiber optic cable. As another example, communications interface 1270 may be a local area network (LAN) card to provide a data communication connection to a compatible LAN, such as Ethernet. Wireless links may also be implemented. For wireless links, the communications interface 1270 sends or receives or both sends and receives electrical, acoustic or electromagnetic signals, including infrared and optical signals, that carry information streams, such as digital data. For example, in wireless handheld devices, such as mobile telephones like cell phones, the communications interface 1270 includes a radio band electromagnetic transmitter and receiver called a radio transceiver. In certain embodiments, the communications interface 1270 enables connection to the communication network 121 for providing optimized imagery for map feature extraction.

The term computer-readable medium is used herein to refer to any medium that participates in providing information to processor 1202, including instructions for execution. Such a medium may take many forms, including, but not limited to, non-volatile media, volatile media and transmission media. Non-volatile media include, for example, optical or magnetic disks, such as storage device 1208. Volatile media include, for example, dynamic memory 1204. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 1278 typically provides information communication using transmission media through one or more networks to other devices that use or process the information. For example, network link 1278 may provide a connection through local network 1280 to a host computer 1282 or to equipment 1284 operated by an Internet Service Provider (ISP). ISP equipment 1284 in turn provides data communication services through the public, world-wide packet-switching communication network of networks now commonly referred to as the Internet 1290.

A computer called a server host 1292 connected to the Internet hosts a process that provides a service in response to information received over the Internet. For example, server host 1292 hosts a process that provides information representing video data for presentation at display 1214. It is contemplated that the components of system can be deployed in various configurations within other computer systems, e.g., host 1282 and server 1292.

FIG. 13 illustrates a chip set 1300 upon which an embodiment of the invention may be implemented. Chip set 1300 is programmed to provide optimized imagery for map feature extraction as described herein and includes, for instance, the processor and memory components described with respect to FIG. 12 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1300 includes a communication mechanism such as a bus 1301 for passing information among the components of the chip set 1300. A processor 1303 has connectivity to the bus 1301 to execute instructions and process information stored in, for example, a memory 1305. The processor 1303 may include one or more processing cores with each core configured to perform independently. A multi-core processor enables multiprocessing within a single physical package. Examples of a multi-core processor include two, four, eight, or greater numbers of processing cores. Alternatively or in addition, the processor 1303 may include one or more microprocessors configured in tandem via the bus 1301 to enable independent execution of instructions, pipelining, and multithreading. The processor 1303 may also be accompanied with one or more specialized components to perform certain processing functions and tasks such as one or more digital signal processors (DSP) 1307, or one or more application-specific integrated circuits (ASIC) 1309. A DSP 1307 typically is configured to process real-world signals (e.g., sound) in real time independently of the processor 1303. Similarly, an ASIC 1309 can be configured to perform specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1303 and accompanying components have connectivity to the memory 1305 via the bus 1301. The memory 1305 includes both dynamic memory (e.g., RAM, magnetic disk, writable optical disk, etc.) and static memory (e.g., ROM, CD-ROM, etc.) for storing executable instructions that when executed perform the inventive steps described herein to provide optimized imagery for map feature extraction. The memory 1305 also stores the data associated with or generated by the execution of the inventive steps.

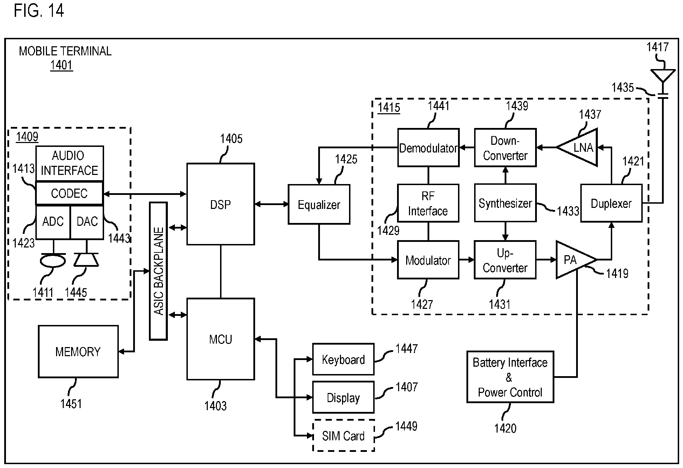

FIG. 14 is a diagram of exemplary components of a mobile terminal (e.g., vehicle, user device, and/or component thereof) capable of operating in the system of FIG. 1, according to one embodiment. Generally, a radio receiver is often defined in terms of front-end and back-end characteristics. The front end of the receiver encompasses all of the Radio Frequency (RF) circuitry whereas the back end encompasses all of the base-band processing circuitry. Pertinent internal components of the telephone include a Main Control Unit (MCU) 1403, a Digital Signal Processor (DSP) 1405, and a receiver/transmitter unit including a microphone gain control unit and a speaker gain control unit. A main display unit 1407 provides a display to the user in support of various applications and mobile station functions that offer automatic contact matching. An audio function circuitry 1409 includes a microphone 1411 and microphone amplifier that amplifies the speech signal output from the microphone 1411. The amplified speech signal output from the microphone 1411 is fed to a coder/decoder (CODEC) 1413.

A radio section 1415 amplifies power and converts frequency in order to communicate with a base station, which is included in a mobile communication system, via antenna 1417. The power amplifier (PA) 1419 and the transmitter/modulation circuitry are operationally responsive to the MCU 1403, with an output from the PA 1419 coupled to the duplexer 1421 or circulator or antenna switch, as known in the art. The PA 1419 also couples to a battery interface and power control unit 1420.

In use, a user of mobile station 1401 speaks into the microphone 1411 and his or her voice along with any detected background noise is converted into an analog voltage. The analog voltage is then converted into a digital signal through the Analog to Digital Converter (ADC) 1423. The control unit 1403 routes the digital signal into the DSP 1405 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, 5G New Radio networks, code division multiple access (CDMA), wireless fidelity (WiFi), satellite, and the like.

The encoded signals are then routed to an equalizer 1425 for compensation of any frequency-dependent impairments that occur during transmission though the air such as phase and amplitude distortion. After equalizing the bit stream, the modulator 1427 combines the signal with a RF signal generated in the RF interface 1429. The modulator 1427 generates a sine wave by way of frequency or phase modulation. In order to prepare the signal for transmission, an up-converter 1431 combines the sine wave output from the modulator 1427 with another sine wave generated by a synthesizer 1433 to achieve the desired frequency of transmission. The signal is then sent through a PA 1419 to increase the signal to an appropriate power level. In practical systems, the PA 1419 acts as a variable gain amplifier whose gain is controlled by the DSP 1405 from information received from a network base station. The signal is then filtered within the duplexer 1421 and optionally sent to an antenna coupler 1435 to match impedances to provide maximum power transfer. Finally, the signal is transmitted via antenna 1417 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1401 are received via antenna 1417 and immediately amplified by a low noise amplifier (LNA) 1437. A down-converter 1439 lowers the carrier frequency while the demodulator 1441 strips away the RF leaving only a digital bit stream. The signal then goes through the equalizer 1425 and is processed by the DSP 1405. A Digital to Analog Converter (DAC) 1443 converts the signal and the resulting output is transmitted to the user through the speaker 1445, all under control of a Main Control Unit (MCU) 1403-which can be implemented as a Central Processing Unit (CPU) (not shown).

The MCU 1403 receives various signals including input signals from the keyboard 1447. The keyboard 1447 and/or the MCU 1403 in combination with other user input components (e.g., the microphone 1411) comprise a user interface circuitry for managing user input. The MCU 1403 runs a user interface software to facilitate user control of at least some functions of the mobile station 1401 to provide optimized imagery for map feature extraction. The MCU 1403 also delivers a display command and a switch command to the display 1407 and to the speech output switching controller, respectively. Further, the MCU 1403 exchanges information with the DSP 1405 and can access an optionally incorporated SIM card 1449 and a memory 1451. In addition, the MCU 1403 executes various control functions required of the station. The DSP 1405 may, depending upon the implementation, perform any of a variety of conventional digital processing functions on the voice signals. Additionally, DSP 1405 determines the background noise level of the local environment from the signals detected by microphone 1411 and sets the gain of microphone 1411 to a level selected to compensate for the natural tendency of the user of the mobile station 1401.

The CODEC 1413 includes the ADC 1423 and DAC 1443. The memory 1451 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1451 may be, but not limited to, a single memory, CD, DVD, ROM, RAM, EEPROM, optical storage, or any other non-volatile or non-transitory storage medium capable of storing digital data.

An optionally incorporated SIM card 1449 carries, for instance, important information, such as the cellular phone number, the carrier supplying service, subscription details, and security information. The SIM card 1449 serves primarily to identify the mobile station 1401 on a radio network. The card 1449 also contains a memory for storing a personal telephone number registry, text messages, and user specific mobile station settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A computer-implemented method comprising:
receiving a plurality of drives, wherein each drive of the plurality of drives is a continuous data collection event in which imagery is captured by a sensor of a vehicle or a device as the vehicle or the device travels along a path, and wherein each drive comprises the imagery and metadata indicating location coordinates and timestamp data for each captured image or captured video;
determining a quantified redundancy between each drive and one or more selected drives, wherein the quantified redundancy is based on a percentage of overlap between each drive and one of the one or more selected drives;
performing a classification of each drive as redundant or not redundant by comparing of the quantified redundancy against a redundancy threshold;
filtering the plurality of drives based on the classification; and
providing the filtered plurality of drives as an output.

2. The method of claim 1, further comprising:
performing a map feature extraction on the filtered plurality of drives.

3. The method of claim 1, wherein the percentage of overlap is determined by:
adding a distance buffer to the one or more selected drives to generate one or more buffered areas,
wherein the distance buffer is added perpendicular to a direction of travel of each of the one or more selected drives; and
wherein the percentage of overlap is determined based on the one or more buffered areas.

4. The method of claim 3, wherein the percentage of overlap is computed as a ratio of a length of each drive that intersects with one of the one or more buffered areas, divided by a total length of said drive.

5. The method of claim 3, further comprising:
determining a count of drives for a road segment, wherein the count is defined by a number of the one or more selected drives and a number of the plurality of drives that intersects the one or more buffered areas,
wherein the filtering of the plurality of drives is further based on determining that the count exceeds a threshold count.

6. The method of claim 1, further comprising:
segmenting each drive, the one or more selected drives, or a combination thereof into a plurality of segments,
wherein the determining of the quantified redundancy, the performing of the classification of each drive, the filtering of the plurality of drives, or a combination thereof is based on the plurality of segments.

7. The method of claim 1, wherein each of the one or more selected drives is a drive that has been previously classified as not redundant.

8. The method of claim 7, further comprising:
prior to the determining the quantified redundancy, sorting the plurality of drives in order of drive length, wherein the determining the quantified redundancy is performed on each of the plurality of drives in the order of drive length.

9. The method of claim 7, further comprising:
prior to the determining the quantified redundancy, sorting the plurality of drives in order of data collection date , wherein the determining the quantified redundancy is performed on each of the plurality of drives in the order of data collection date.

10. The method of claim 1, wherein the classification of each drive as redundant or not redundant is further based on a direction of travel of each drive.

11. The method of claim 1, further comprising:
partitioning the plurality of drives based on one or more tiles,
wherein the determining of the quantified redundancy, the performing of the classification of each drive as redundant or not redundant, or a combination thereof is based on the one or more tiles.

12. The method of claim 11, wherein the determining of the quantified redundancy, the performing of the classification of each drive as redundant or not redundant, or a combination thereof is performed using parallel processing based on the one or more tiles or using one or more Universal Transverse Mercator (UTM) zones.

13. The method of claim 12, further comprising:
determining a most common UTM zone for each tile of the one or more tiles,
wherein the determining of the quantified redundancy, the performing of the classification of each drive as redundant or not redundant, or a combination thereof for each tile is based on the most common UTM zone.

14. An apparatus comprising:
at least one processor; and
at least one memory including computer program code for one or more programs,
the at least one memory and the computer program code configured to, with the at least one processor, cause the apparatus to perform at least the following,
receive a plurality of drives, wherein each drive of the plurality of drives is a continuous data collection event in which imagery is captured by a sensor of a vehicle or a device as the vehicle or the device travels along a path, and wherein each drive comprises the imagery and metadata indicating location coordinates and timestamp data for each captured image or captured video;
determine a quantified redundancy between each drive and one or more selected drives, wherein the quantified redundancy is based on a percentage of overlap between each drive and one of the one or more selected drives;
perform a classification of each drive as redundant or not redundant by comparing of the quantified redundancy against a redundancy threshold;
filter the plurality of drives based on the classification; and
provide the filtered plurality of drives as an output.

15. A non-transitory computer-readable storage medium, carrying one or more sequences of one or more instructions which, when executed by one or more processors, cause an apparatus to at least perform the following steps:
receiving a plurality of drives, wherein each drive of the plurality of drives is a continuous data collection event in which imagery is captured by a sensor of a vehicle or a device as the vehicle or the device travels along a path, and wherein each drive comprises the imagery and metadata indicating location coordinates and timestamp data for each captured image or captured video;
determining a quantified redundancy between each drive and one or more selected drives, wherein the quantified redundancy is based on a percentage of overlap between each drive and one of the one or more selected drives;
performing a classification of each drive as redundant or not redundant by comparing of the quantified redundancy against a redundancy threshold;
filtering the plurality of drives based on the classification; and
providing the filtered plurality of drives as an output.
